## Europäisches Patentamt

## European Patent Office

## Office européen des brevets

(11) Publication number: **0 301 094**
A1

# EUROPEAN PATENT APPLICATION

published in accordance with Art. 158(3) EPC

(21) Application number: 87902728.2

(22) Date of filing: 13.04.87

Data of the international application taken as a basis:

(86) International application number:
PCT/JP 87/00237

(87) International publication number:
WO 87/06192 (22.10.87 87/23)

(51) Int. Cl.⁴: **B 41 J 29/36**, G 06 F 3/09,
G 06 F 3/12

(30) Priority: 14.04.86 JP 85684/86
14.04.86 JP 85685/86

(43) Date of publication of application: 01.02.89
Bulletin 89/5

(84) Designated Contracting States: DE FR GB IT

(71) Applicant: BROTHER KOGYO KABUSHIKI KAISHA, 35, Horita-dori 9-chome Mizuho-ku, Nagoya-shi, Aichi 467 (JP)

(72) Inventor: MORI, Masaharu Brother Kogyo Kabushiki Kaisha, 35, Horita-dori 9-chome, Mizuho-ku, Nagoya-shi Aichi 467 (JP)
Inventor: YAMAKAWA, Kiyoshi Brother Kogyo Kabushiki Kaisha, 35, Horita-dori 9-chome, Mizuhoku, Nagoya-shi Aichi 467 (JP)
Inventor: UENO, Hideo Brother Kogyo Kabushiki Kaisha, 35, Horita-dori 9-chome, Mizuho-ku, Nagoya-shi Aichi 467 (JP)

(74) Representative: Senior, Alan Murray et al, J.A. KEMP & CO 14 South Square Gray's Inn, London WC1R 5EU (GB)

(54) PRINTER.

(57) A printer which allows a hyphen preceding or succeeding a word to be erased or not to be erased when words are erased on a word basis, and also relates to a printer which allows only a hyphen to be erased. Although, up to this time, a printer equipped with a mechanism to automatically erase words on a word basis has been available, there is a problem that even when only one word containing misprinted letters out of two words connected by a hyphen is to be erased, both of said words and the hyphen are erased, resulting in an unnecessary erasing and printing of a correct word to decrease work efficiency. In view of the above, to solve the problem described above, this invention provides a detecting means which detects, upon receipt of a command for erasing a word, whether there is a hyphen or not at a print positions one letter ahead of the leading letter of a word corresponding to a print head or at a print position one letter behind the trailing letter thereof, and provides a control means which causes said hyphen to be erased on a signal from said detecting means or a control means which keeps said hyphen from being erased; or provides a control means which controls the operation of a mechanism for erasing according to a signal from the detecting means.

1

## SPECIFICATION

## Printing apparatus

TECHNICAL FIELD

The present invention relates to a printing apparatus, and more specifically, relates to a printing apparatus which has an erasing mechanism erasing a word consisting of an assembly of characters with a unit of word, especially a printing apparatus which erases also a hyphen preceding or following the word when erasing the word, a printing apparatus which does not erase the above-mentioned hyphen, or a printing apparatus which erases only the above-mentioned hyphen.

BACKGROUND ART

When printing writings or the like on a print paper by a printing apparatus such as a typewriter, words are often printed in wrong spelling, and it is required to erase a character string such as a word which has been misprinted and print it again.

Then, many of the recent electronic typewriters and the like are provided with a present position memory for storing the present position of a head and a print data memory for storing data inputted from a keyboard and printed in a controlling apparatus thereof, and are provided with an

2

erasing mechanism which erases a word consisting of printed characters in sequence from the last by a correction ribbon using the data from the present position memory and print data memory in response to an operation of an erase command key on the keyboard.

As for the printing apparatus having the erasing mechanism of this type, for example, in the Japanese Patent Laid-Open No. 210482/1985, a printing apparatus is described which automatically erases each word which consists of one or plural consecutive printed characters and the both ends of which are separated by space in response to an operation of an erase command key.

DISCLOSURE OF THE INVENTION

(Problems to be Solved by the Present Invention)

In the case of printing a text in English, German or the like by a typewriter, a word and another word are often connected by a hyphen, and when one of the words is misprinted by wrong typing, the word is required to be erased and reprinted, and when a hyphen has become unnecessary, only the hyphen is required to be erased.

In the printing apparatus described in the above patent publication, a series of character strings sectioned by the preceding and following spaces is taken as a word, and this word is automatically erased, and therefore two words connected by a hyphen are erased as one word.

In this case, even when only one of the two words is misprinted or when only the hyphen is erased, the both words and the hyphen are to be erased and reprinted, and therefore the correct word is unnecessarily erased and reprinted, resulting in a reduction in work efficiency.

(Objects of the Invention)

A first object of the present invention is to provide a printing apparatus which can erase only one of the words connected by a hyphen with the hyphen, or can erase only one of the words with the hyphen left intact.

A second object of the present invention is to provide a printing apparatus which can erase only a hyphen taken as a word as required.

(Means to Solve the Problems)

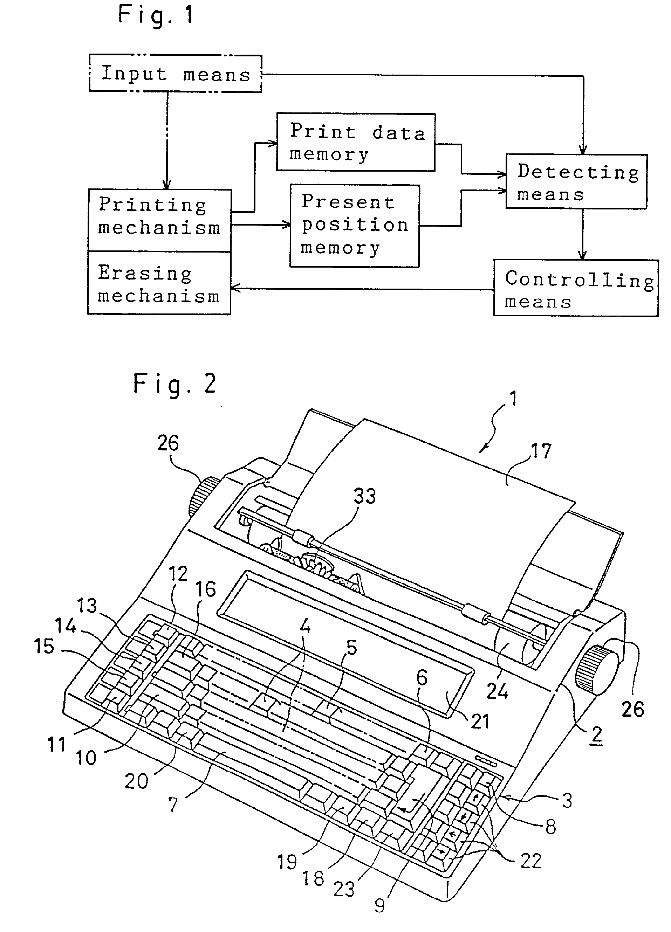

A printing apparatus in accordance with the present first invention, as shown in a functional block diagram in Fig. 1, relates to a word-erasable printing apparatus having a printing mechanism for printing characters or symbols corresponding to inputted data on a print paper, a print data memory for storing print data corresponding to print positions, a present position memory for storing the present position of a print head of the printing mechanism so as to correspond to the print position, and an erasing mechanism which starts operation by an input of a word erase command

4

signal, erases sequentially characters printed by the printing mechanism, and thereby erases a word consisting of an assembly of characters, wherein said printing apparatus is characterized by comprising; a detecting means for detecting whether or not a hyphen is present at the print position one order higher than the head character or the print position one order lower than the last character of a word containing a character at the print position corresponding to the print head by means of the print data memory (110) and the present position memory (112) on receiving the word erase command signal, and a controlling means for outputting a control signal for erasing the hyphen at the print position to the erasing mechanism based on a signal from the detecting means.

A printing apparatus in accordance with a present second invention, as shown in the functional block diagram in Fig. 1, relates to a printing apparatus having the same preamble as the first invention, wherein said printing apparatus is characterized by comprising; a detecting means for detecting whether or not a hyphen is present at the print position one order higher than the head character or the print position one order lower than the last character of a word containing a character at the print position corresponding to the print head by means of the print data memory and the present position memory on receiving the word erase command signal, and a controlling means for outputting a control signal for

5

not erasing the hyphen at the print position to the erasing mechanism based on a signal from the detecting means.

A printing apparatus in accordance with a present third invention, as shown in the functional block diagram in Fig. 1, relates to a word-erasable printing apparatus having a printing mechanism printing characters or symbols corresponding to inputted data on a print paper, a print data memory for storing the print data so as to correspond to the print position, a present position memory for storing the present position of a print head of the printing mechanism so as to correspond to the print position, and an erasing mechanism which starts operation by an input of a word erase command signal, erases sequentially characters printed by the printing mechanism, and thereby erases a word consisting of an assembly of characters with a unit of word, wherein said printing appparatus is characterized by comprising; a detecting means for detecting whether or not a hyphen is present at the print position corresponding to the print head by means of the print data memory and the present position memory on receiving the word erase command signal, and a controlling means which processes the above-mentioned hyphen as a single word and controls the erasing mechanism based on a signal from the detecting means.

(Function)

The printing apparatus in accordance with the present first invention is configurated as described above, and therefore the print data memory stores the data printed on a print paper by the printing mechanism corresponding to the print position and the present position memory stores the present position of the print head so as to correspond to the print position.

Then, on receiving a word erase command signal, the erasing mechanism erases a word containing a character at the print position corresponding to the print head based on the data of the print data memory and the data of the present position memory. On receiving the word erase command signal at this erasure, the detecting means detects whether or not a hyphen is present at the print position one order higher than the head character or the position one order lower than the last character of a word containing a character at the print position corresponding to the print head.

Then, the controlling means outputs a control signal for erasing the hyphen detected by the detecting means to the erasing mechanism, and the hyphen preceding or following the word corresponding to the print head is erased along with the word.

The printing apparatus in accordance with the present second invention functions likewise the above first invention, but differs therefrom in the following point.

That is, the controlling means outputs a control signal

00301094

7

for not erasing the hyphen detected by the detecting means to the erasing mechanism, and only the word corresponding to the print head is erased and the hyphen is not erased to be left intact.

The printing apparatus in accordance with the present third invention functions likewise the above first invention, but differs therefrom in the following point. On receiving a word erase command signal at this erasure, the detecting means detects whether or not a hyphen is present at the print position corresponding to the print head.

The controlling means processes a hyphen as a single word consisting of a character, and controls the erasing mechanism based on a signal detected by the detecting means. (Advantages of the Invention)

In accordance with the printing apparatus of the present first invention, as described above, configuration is made so as to detect a hyphen preceding or following a word, therefore the erasing mechanism is controlled so as to erase only one word among a plurality of words connected by hyphens, and thereby the work efficiency in correcting the misprinted word can be enhanced. Furthermore, configuration is made so as to erase a hyphen along with the above-mentioned one word, therefore this printing apparatus is advantageous in the point of space when erasing the misprinted word and making corrective print of a word having a

8

larger number of characters than it with changing the print pitch.

In accordance with the printing apparatus of the present second invention, likewise the first invention, the erasing mechanism is controlled so as to erase only one word among a plurality of words connected by hyphens, and thereby the work efficiency in correcting the misprinted word can be enhanced. Furthermore, configuration is made so as not to erase a hyphen when erasing a word, and therefore when the hyphen is not required to be erased, an wasteful operation such that a hyphen is wrongly erased and reprinted can be saved.

In accordance with the printing apparatus of the present third invention, as described above, a hyphen is handled as one word and only the hyphen can be erased, therefore the erasing mechanism is controlled so as to erase only one word at the position of the print head among a plurality of words connected by hyphens, and thereby the work efficiency in correcting the misprinted word can be enhanced.

Furthermore, a hyphen acts to section a word, therefore when the hyphen is not required to be erased, a wasteful operation such that the hyphen is wrongly erased and reprinted is not performed.


BRIEF DESCRIPTION OF THE DRAWINGS

Fig. 1 is a functional block diagram of a printing

9

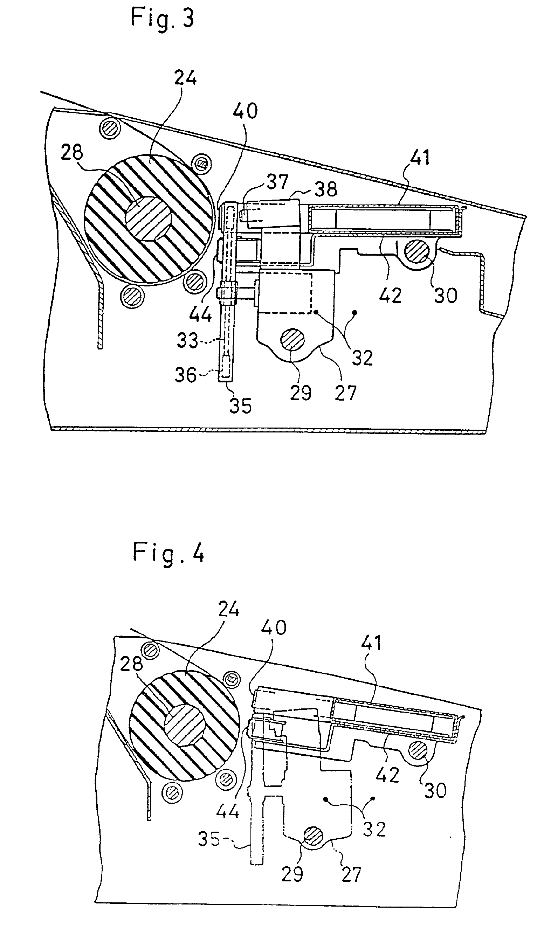

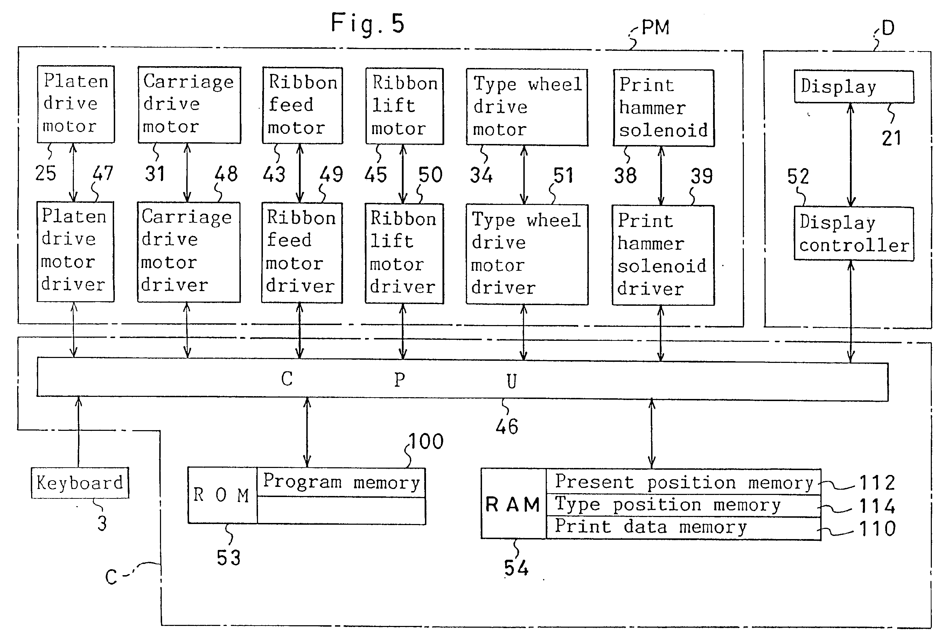

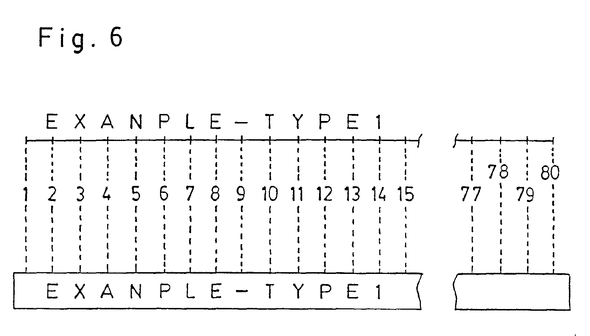

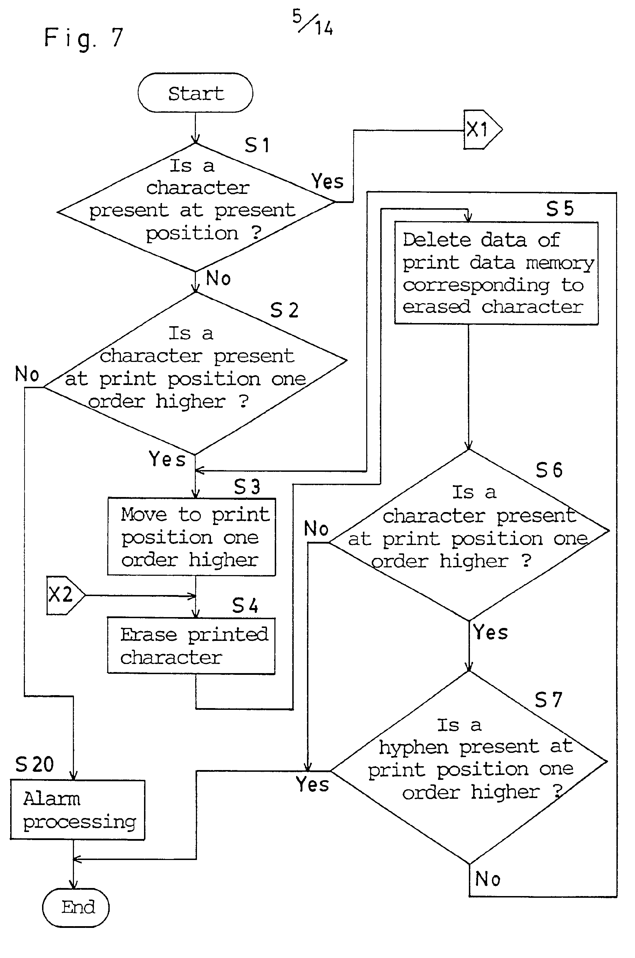

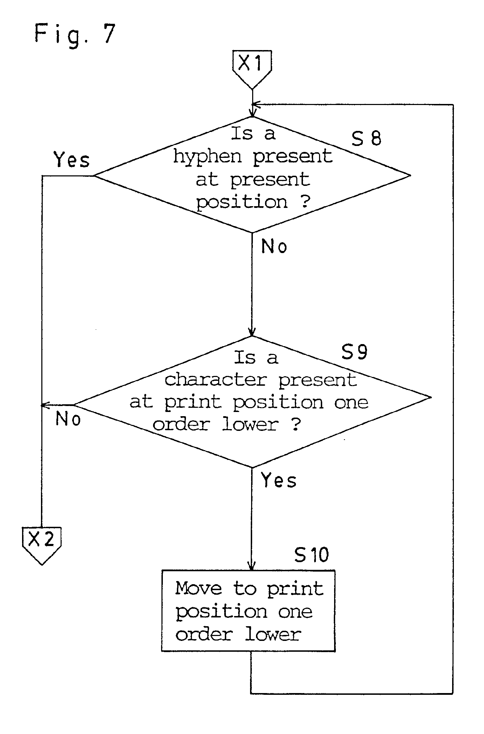

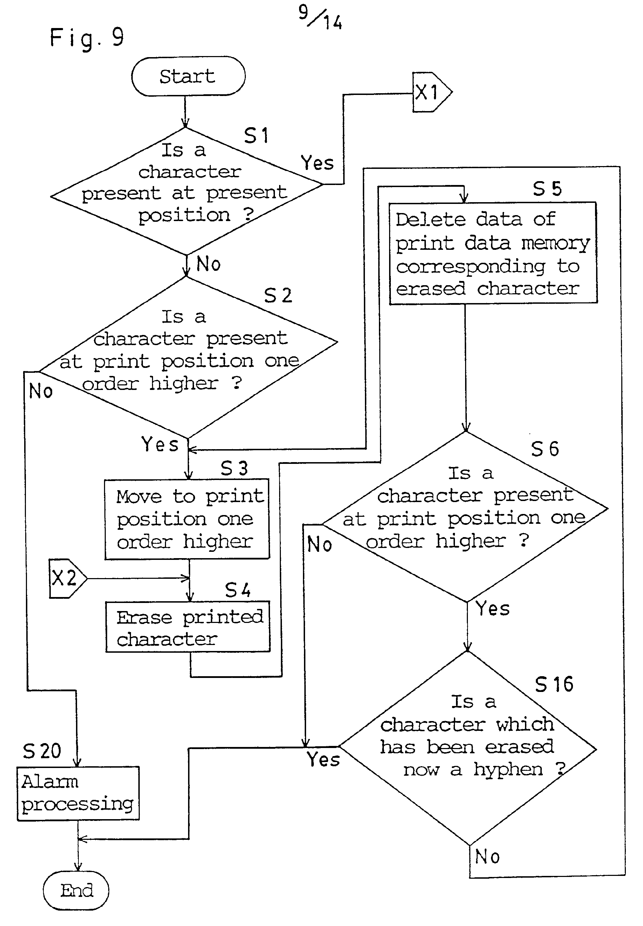

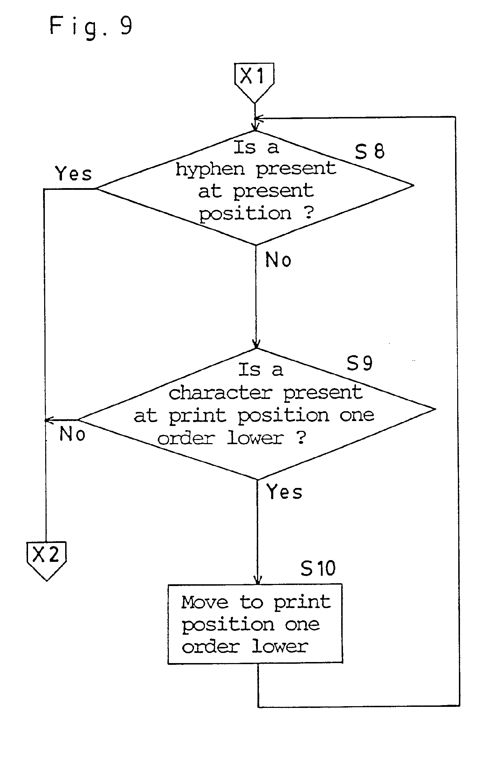

apparatus in accordance with the present invention, Fig. 2 through Fig. 11 show embodiments in accordance with the present invention, Fig. 2 is a perspective view of an electronic typewriter, Fig. 3 is a vertical sectional fragmental side view showing a major part of the electronic typewriter, Fig. 4 is a view equivalent to Fig. 3 when a holder is located at the correcting position and erases the printed character by a correction ribbon, Fig. 5 is a block diagram of a control system of the typewriter, Fig. 6 is a view exemplifying relationships among the printed word, the print position and the data in a print data memory, and Fig. 7 through Fig. 11 are flowcharts of word erase control, respectively.

(The Best Form for Embodying the Invention)

Hereinafter, description is made on an embodiment in accordance with the present invention based on the drawings.

This embodiment is the case where the present invention is applied to an electronic typewriter 1, and a word consisting of an assembly of the misprinted characters is erased by an erasing mechanism provided with a correction ribbon by operating an erase command key 23 installed on a key board 3 of the typewriter 1.

In the front part of a frame 2 of the typewriter 1, as shown in Fig. 2, the keyboard 3 is disposed, and a printing mechanism PM is disposed behind the keyboard 3 in the frame 2.

The following various keys are installed on the above-described keyboard 3. Namely, character keys comprising alphabet keys 4 for inputting each alphabetic character, numeral keys 5 for inputting numerals 0-9, and symbol keys for inputting a hyphen and the like, a space key 7, a backspace key 8, a return key 9, a shift key 10, a code key 11, a left margin set key 12, a right margin set key 13, a tab set key 14, a tab clear key 15, a tab key 16, a paper feed key 18, a paper return key 19, a repeat key 20, a cursor shift key 22 for shifting a cursor indicating the data input position on a display 21 as described later and an erase command key 23 outputting an erase command signal. Description on each function obtained by operating the above-mentioned various function keys is omitted because they are the same as those of the existing typewriter.

In the rear part of the keyboard 3, the display 21 for displaying characters and symbols entered by operating the character keys 4, 5 and 6, the space key 7 and the like is installed. Then, a platen 24 is disposed in the right-left direction of the frame 2, and is driven rotatively automatically or manually by a platen drive motor 25 or a platen knob 26 to feed a print paper 17.

Also, as shown in Fig. 3, a carriage 27 is supported by two guide rods 29 and 30 installed in parallel with a platen shaft 28, and is moved reciprocatively along the platen 24 by a wire 32 driven by a carriage drive motor 31. Furthermore, a type wheel drive motor 34 driving a type wheel 33 is disposed in the carriage 27, and on the motor shaft thereof, as shown in Fig. 3, the type wheel 33 housed in a wheel cassette 35 is mounted detachably, and is driven rotatively, and a type 36 on the tip of the selected spoke of the type wheel 33 is set at the print position facing a print hammer 37. The print hammer 37 is attached to the top of the carriage 27, and a hammer solenoid thereof 38 is driven by a driving current from a print hammer driver 39 as described later, and strikes the type 36 set at the print position to the print paper 17.

A ribbon cassette 41 feeding a print ribbon 40 is placed on a holder 42, and the front end part of the holder 42 is attached rotatably to the carriage 27. The print ribbon 40 is fed from a feed spool of the ribbon cassette 41, being taken up on a take-up spool driven by a ribbon feed motor 43. Also, a correction ribbon 44 is installed in the portion formed one step lower at the rear part of the holder 42. That is, the feed spool feeding the correction ribbon 44 is installed on the right side of the ribbon cassette 41, and the take-up spool taking up the correction ribbon 44 is installed on the left side of the ribbon cassette 41.

Furthermore, in order to make position change-over among

12

the print position (refer to Fig. 3) where the print ribbon 40 is positioned between the type 36 at the print position and the platen 24, the retreat position (not illustrated) where the print ribbon 40 is moved lower than the print position and the correcting position (refer to Fig. 4) where the correction ribbon 44 is positioned between the type 36 at the print position and the platen 24, a cam mechanism (not illustrated) which is interlocked with a drive shaft (not illustrated) driven rotatively by a ribbon lift motor 45 and swings the holder 42 to the above-mentioned three positions is attached to the carriage 27. Then, a well-known correction ribbon take-up mechanism (not illustrated) for taking up the correction ribbon 44 on the take-up spool from the feed spool is installed in the carriage 27 and the holder 42.

Accordingly, the printing mechanism PM is constituted with the platen 24 and the platen driving apparatus, the carriage 27 and the carriage driving apparatus, the type wheel 33 and the type wheel driving apparatus, the print ribbon 40 and the ribbon feed driving apparatus, the cam mechanism swinging the print ribbon 40 and the correction ribbon 44 to the print position and the driving apparatus thereof, the print hammer 37 and the print hammer driving apparatus and the like, and each driving apparatus of the printing mechanism is connected to a CPU46 (central processing unit) of the controlling apparatus.

Next, description is made on the whole configuration of the control system of this typewriter 1 based on a block diagram in Fig. 5.

A driving apparatus for the above-mentioned printing mechanism PM is constituted with the platen drive motor 25 and the driver 47 thereof, the carriage drive motor 31 and the driver 48 thereof, the ribbon feed motor 43 and the driver 49 thereof, the ribbon lift motor 45 and the driver 50 thereof, the type wheel drive motor 34 and the driver 51 thereof, the print hammer solenoid 38 and the driver 39 thereof and the like.

A displaying apparatus D is constituted with the display 21 and a display controller 52, and the display controller 52 stores display data for displaying characters and the like on the display 21 corresponding to code data of characters and symbols, and outputs the display data corresponding to the code data inputted to the display controller 52.

A controlling apparatus C is constituted with the CPU46 and a ROM (read only memory) 53 and a RAM (random access memory) 54 which are connected to the CPU46, and the keyboard 3, the respective drivers 39, 47-51 of the above-mentioned driving apparatuses and the display controller 52 are connected to the CPU46.

In the ROM53, a program memory 100 is installed which stores a control program for controlling the respective

14

motors 25, 31, 34, 43 and 45 of the printing mechanism PM, the hammer solenoid 38 and the display 21 so as to correspond to the code data of characters and the like inputted from the character keys 4, 5 and 6, the space key 7 and the like or the code data read from a print data memory 110 as described later, a control program for controlling the motors 25, 31, 34, 43 and 45 and the print hammer solenoid 38 so as to correspond to the code data of each function inputted from various function keys on the keyboard 3, a control program for word erase control as described later and the like.

In the RAM54, installed are the print data memory 110 for storing the print data in sequence so as to correspond to the print position, a present position memory 112 for storing the present position of the carriage 27 corresponding to the print position, a type position memory 114 for storing the spoke number of the type 36 located at the present rotary angle position (i.e. the print position) of the type wheel 33, and various memories for storing temporarily the result of processing by the CPU46.

The CPU46 controls the printing mechanism PM to print on the print paper 17 based on the code data corresponding to characters and symbols such as alphabet, numerals and space inputted from the character keys 4. 5 and 6 and the space key 7, controls the print data memory 110 of the RAM54 to store in sequence the print data so as to correspond to the print position, and controls the present position memory 112 and the type position memory 114 of the RAM54 to store the present position data which are changed every time the carriage drive motor 31 or the type wheel drive motor 34 is driven. Also, the CPU46 outputs a control signal corresponding to the input code data to the respective drivers 39, 47 - 51 of the printing mechanism PM and the display controller 52 by processing the code data inputted from various function keys of the keyboard 3 by the control program read from the program memory 100 of the ROM 53.

Furthermore, the CPU46 processes the code data inputted from the character keys 4, 5 and 6 and the space key 7 or the code data of characters and the like read from the print data memory 110 with the control program read from the program memory 100. Thereby it outputs a control signal corresponding to the code data to the respective drivers 39 and 47 - 51 of the printing mechanism PM and the display controller 52, for controlling the printing mechanism PM and the displaying apparatus D. That is, when the printing mechanism PM is controlled based on the code data, a control signal is outputted to the type wheel drive motor driver 51 from the CPU46, and a driving current is outputted to the type wheel drive motor 34 from the type wheel drive motor driver 51. Then, the type wheel drive motor 34 is rotated by a predetermined angle, and the type 36 of the type wheel 33 corresponding to the code data is set at the print position in front of the print hammer 37, and at the same time, a control signal is outputted from the CPU46 to the ribbon lift motor driver 50, a driving current is outputted from that motor driver 50 to the ribbon lift motor 45, and the holder 42 and the print ribbon 40 are driven swingingly to the print position in Fig. 3 through the drive shaft and the cam mechanism by rotation of the ribbon lift motor 45.

Subsequently, when a control signal is outputted from the CPU46 to the hammer solenoid driver 39, a driving current is outputted from the print hammer solenoid driver 39 to the print hammer solenoid 38, the type 36 of the type-wheel 33 is struck by the print hammer 37, and a character or a symbol is printed on the print paper 17.

Then, when no subsequent key-input is made within a predetermined time, a control signal is outputted from the CPU46 to the ribbon lift motor driver 50, the ribbon lift motor 45 is rotated, and the holder 42 and the print ribbon 40 are returned to the retreat position. Furthermore, control signals are outputted from the CPU46 to the carriage drive motor driver 48 and the ribbon feed motor driver 49 respectively. On the one hand, a driving current is outputted to the carriage drive motor 31 from the carriage drive motor driver 48, the drive motor 31 is rotated by a predetermined amount, and the carriage 27 is moved in the printing direction by one character through the carriage drive wire 32. On the other hand, a driving current is outputted to the ribbon feed motor 43 from the ribbon feed motor driver 49, the ribbon feed motor 43 is rotated by a predetermined amount to feed print ribbon 40.

Also, when the return key 9 is operated, the CPU46 processes the code data from the keyboard 3 with the control program read from the program memory 100, and thereby control signals are outputted to the carriage drive motor driver 48 and the platen drive motor driver 47. Then, a driving current is outputted to the carriage drive motor 31 from the carriage drive motor driver 48, that drive motor 31 is rotated reversely, and the carriage 27 is returned to the print start position. At the same time, a driving current is outputted from the platen driving motor driver 47 to the platen drive motor 25, that drive motor 25 is rotated by a predetermined amount to feed the print paper by one line.

Furthermore, when erasing a character by operating the erase command key 23, the CPU46 reads the control program for word erase from the program memory 100, and outputs a control signal to the ribbon lift motor driver 50, the ribbon lift motor 45 is rotated, and the holder 42 is swung to the correcting position in Fig. 4. Then, the CPU46 reads the last data of the print data memory 110, a control signal is outputted to the type wheel drive motor driver 51, the type wheel 33 is rotated by the type wheel drive motor 34, the same type 36 as the character or symbol to be erased is positioned at the print position, the print hammer solenoid 38 is driven by a driving current from the print hammer driver 39, the print hammer 37 is made to strike, and the printed character is erased.

Next, description is made on a first example of word erase control.

This word erase control is such that in the case where two words are printed with connecting by a hyphen, the hyphen is a symbol of separation between a word and another word, but it is assumed as a character likewise various symbols, being considered to belong to the preceding word preceding the hyphen, and the preceding word is erased including the hyphen.

First, description is made on the outline of this word erase control to facilitate understanding of description on a flowchart of the word erase control.

For one example, Fig. 6 schematically exemplifies a character string "EXANPLE-TYPE 1" wherein a preceding word preceding a hyphen (ninth digit) is printed in wrong spelling of "EXANPLE" and the data in the print data memory 110, and spaces are typed at the first position and the fifteenth position respectively.

When erasing "EXANPLE" of the preceding word, the print head is positioned at the print position of any one of the second position - the ninth position, and by operating the erase command key 23, the print head is moved to the print position of the hyphen at ninth-position, and the characters are erased sequentially from the ninth position to the second position starting with the hyphen.

Also, when erasing "TYPE 1" of the following word following the hyphen, the print head is positioned at the print position of any one of the tenth position - fifteenth position, and by operating the erase command key 23, the print head is moved to the print position of the fourteenth position, and the characters are erased sequentially from the fourteenth position to the tenth position.

Next, description is made on a flowchart of the first example of the word erase control performed by the controlling apparatus of this electronic type writer with reference to Fig. 7.

When the erase command key 23 is operated and a word erase command signal is outputted from the keyboard 3 to the CPU46, step S1 (hereinafter, expressed simply as S1, and the same is true of other steps) is executed. In S1, decision is made on whether or not a character is present at the present position of the print head (whether or not a character has been printed) based on the data of the present position memory 112 and the data of the print data memory 110, and when a character is present at the present position, processing proceeds to S8, and when no character is present, processing proceeds to S2.

In S2, decision is made on whether or not a character is present at the print position one order higher (direction reverse to the printing direction), and when no character is present, processing moves to S20. This means that the case where no character is present at the present position and the print position one order higher is, for example, the case where, in Fig. 6, the print head is located at the print position on and after the sixteenth print position after the space at fifteenth-position, or the case where the print head corresponds to the space at first-position and the higher order side thereof is left margin, and in these cases, in S20, alarm is raised by buzzer, alarm lamp or the like, and processing ends.

Also, in the case where the result of decision in S2 is YES (the case where a character is present at the print position one order higher), that is, the case where the print head is located at the position of space one order lower than the last character of the following word (the fifteenth position in Fig. 6), processing proceeds to S3.

Steps S3 - S7 are steps of erasing characters one by one in sequence from the last character toward the higher order side, and in S3, a control signal is outputted from the CPU46 to the carriage drive motor driver 48, and thereby the carriage 27 is moved to the print position one order higher. Then, in S4, the same character is printed through the correction ribbon 44 with superposing on the printed character located at the print position corresponding to the present print head, and thereby the printed character is erased, and in the following S5, the data of the print data memory 110 corresponding to the printed character erased in S4 is deleted.

Also, in the next S6, decision is made on whether or not a character is present at the print position one order higher than the present position of the print head, and when a character is present, processing moves to S7, and when no character is present (the second position in Fig. 6), the control ends. Further in S7, decision is made on whether or not the print position one order higher than the present position of the print head is a hyphen, and when it is not a hyphen, processing returns to S3, and when it is a hyphen (the tenth position in Fig. 6), the control ends.

Then, in the case where the following word is a word consisting of a plurality of characters, S3 - S7 are repeated, and the data of the print data memory 110 corresponding to the printed character erased are deleted in sequence in parallel with sequential erasure up to the head printed character of the following word. Also, when the

22

print head reaches the print position of the head character of the following word and erasure up to the head character is completed, in S7, the print position one order higher is decided to be a hyphen, and the erasure control ends.

Furthermore, when the erase command key 23 is operated in the state that the print head is positioned at the print position corresponding to any one of printed characters of the preceding word or any one of printed characters of the following word or a hyphen, in S1, it is decided that a character is present at the present position, and processing proceeds to S8, and in S8, decision is made on whether or not the present position of the print head is a hyphen, and when it is a hyphen (the ninth print position in Fig. 6), processing moves to S4, and when it is not a hyphen, processing moves to S9.

In S9, decision is made on whether or not a character is present at the print position one order lower (printing direction), and when no character is present at the print position one order lower (the fourteenth print position in Fig. 6), processing moves to S4, and when a character is present, processing proceeds to S10, and the carriage 27 is moved to the print position one order lower, and processing returns to S8.

Accordingly, in the case where a word is a character string consisting of a plurality of characters, S8 - S10 are

23

repeated, and the print head moves sequentially toward the lower order side. Then, when the print head comes to the print position of the hyphen one order lower than the last character of the preceding word, processing moves from S8 to S4, and when the print head comes to the print position of the last character of the following word, processing moves from S9 to S4.

Then, by repeating S4 - S7 and S3, likewise the above-mentioned, backward sequential erasure one by one from the hyphen one order lower than the last character of the preceding word to the head character of the word, or backward sequential erasure one by one from the last character of the following word to the head character of the word is performed, and the control ends.

As described above, when the preceding word preceding a hyphen is erased, the hyphen is also erased, and when the following word following a hyphen is erased, only the following word is erased.

After the preceding word or the following word has been erased, the print head is moved to the head position of each erased word, and therefore reprint can be made in correct spelling.

Next, description is made on a second example of the word erase control.

This word erase control is such that a hyphen is assumed

24

to belong to the following word, and the following word is erased including the hyphen also.

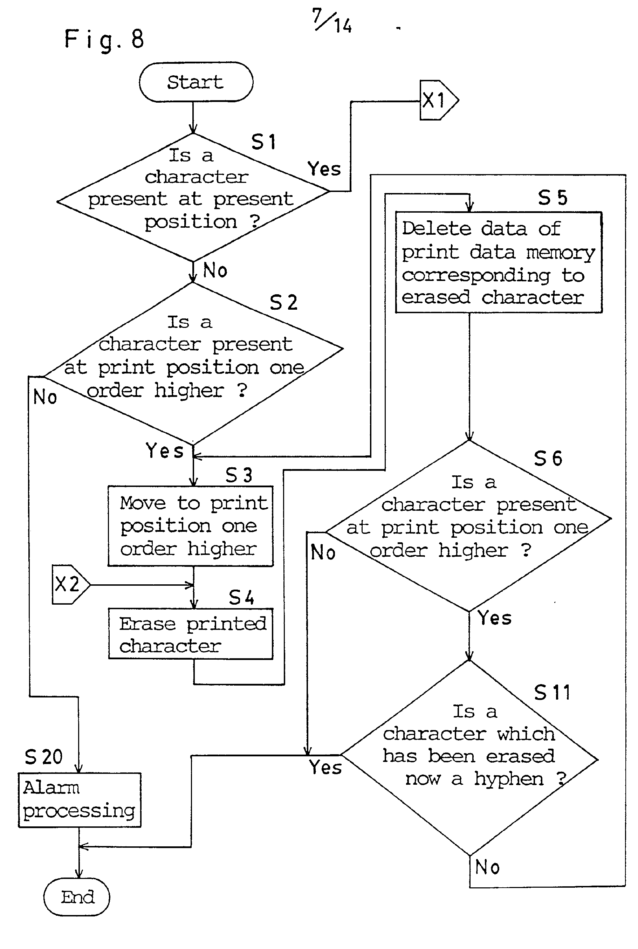

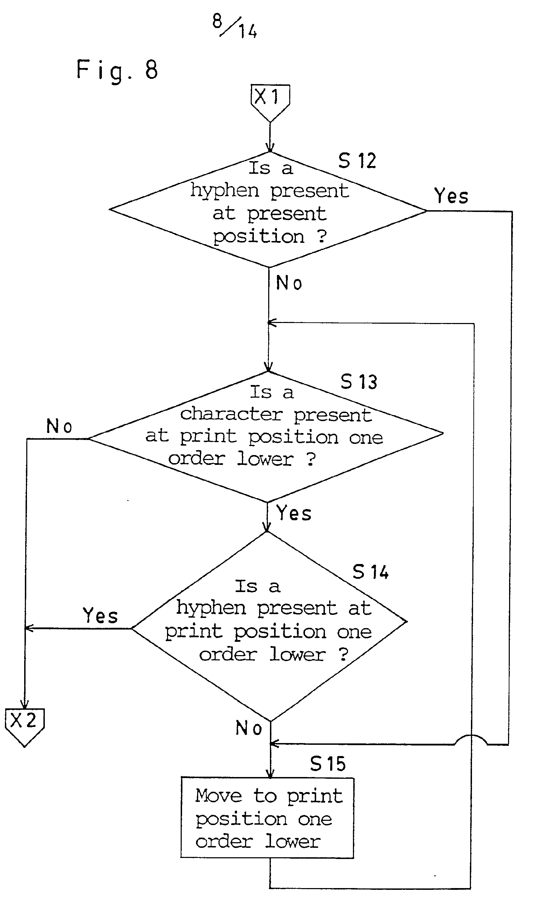

That is to say, description on the routine of this word erase control based on a flowchart in Fig. 8 is the same for S1 - S6 and S20 as the flowchart in Fig. 7, and therefore the description thereon is omitted.

When the result of decision in S6 is YES, that is, when a character is present at the print position one order higher than the present position of the print head, processing proceeds to S11, and in S11, decision is made on whether or not the character which has been erased now is a hyphen, and when a hyphen has been erased, the control ends, and when no hyphen has been erased, processing returns to S3.

Also, where a character is present at the present position of the print head when the erase command key 23 is operated, processing moves from S1 to S12, and in S12, decision is made on whether or not the present position of the print head is a hyphen, and when it is a hyphen (the ninth print position in Fig. 6), processing proceeds to S15, and when it is not a hyphen, processing proceeds to S13. Then, in S13, decision is made on whether or not a character is present at the print position one order lower (printing direction), and when a character is present at the print position one order lower, processing proceeds to S14, and when no character is present (the fourteenth print position), processing proceeds to S4.

In S14, decision is made on whether or not the print position one order lower is a hyphen, and when it is a hyphen, processing proceeds to S4, and when it is not a hyphen, processing proceeds to S15, and in S15, the carriage is moved to the print position one order lower, and processing returns to S13. S13 - S15 are repeated, and the print head moves sequentially toward the lower order side. Accordingly when the erase command key 23 is operated, if the print head is located at the print position of the hyphen, the carriage 27 moves sequentially toward the lower order side, and when it reaches the position of the last character of the following word, processing proceeds from S13 to S4. Then, S4 - S6, S11 and S3 are repeated and the printed characters of the following word are sequentially erased one by one from the last character, and when erasure up to the hyphen is completed, the control ends.

On the other hand, in the case where the print head corresponds to any one of characters of the preceding word when the erase command key 23 is operated, processing goes through S1 and S12 and repeats S13 - S15, and the print head proceeds sequentially toward the lower order side, and when the print head reaches the position of the last character of the preceding word, processing proceeds from S14 to S4, and repeats S4 - S6, S11 and S3, and when erasure from the last

26

character to the head character of the preceding word is completed, the result of decision in S6 becomes NO, and the control ends.

Also, in the case where the print head corresponds to any one of characters of the following word when the erase command key 23 is operated, likewise the above-mentioned, S13 - S15 are repeated and the print head is moved sequentially toward the lower order side, and when the print head reaches the position of the last character of the following word, processing moves from S13 to S4, and repeats S4 - S6, S11 and S3, and when erasure from the last character of the following word to the hyphen is completed, the result of decision in S11 becomes YES, and the control ends.

Next, description is made on a third example of the word erase control.

This word erase control erases the hyphen always when the preceding word preceding the hyphen is erased and when the following word following the hyphen is erased.

The routine of this word erase control differs only for S16 from the flowchart in Fig. 7. This means that in S16, decision is made on whether or not the character which has been erased now is a hyphen, and if NO, processing returns to S3, and if YES, the control ends. In brief, erasure of the preceding word is made sequentially from the hyphen to the head character of this word and also erasure of the following word is made sequentially from the last character of the word to the hyphen.

In addition, in the above-mentioned first example to third example, description is made on the case where two words are printed with connecting by a hyphen, but it is needless to say that this can be applied also to the case where three or more words are printed with connecting by hyphens.

Next, description is made on a fourth example of the word erase control.

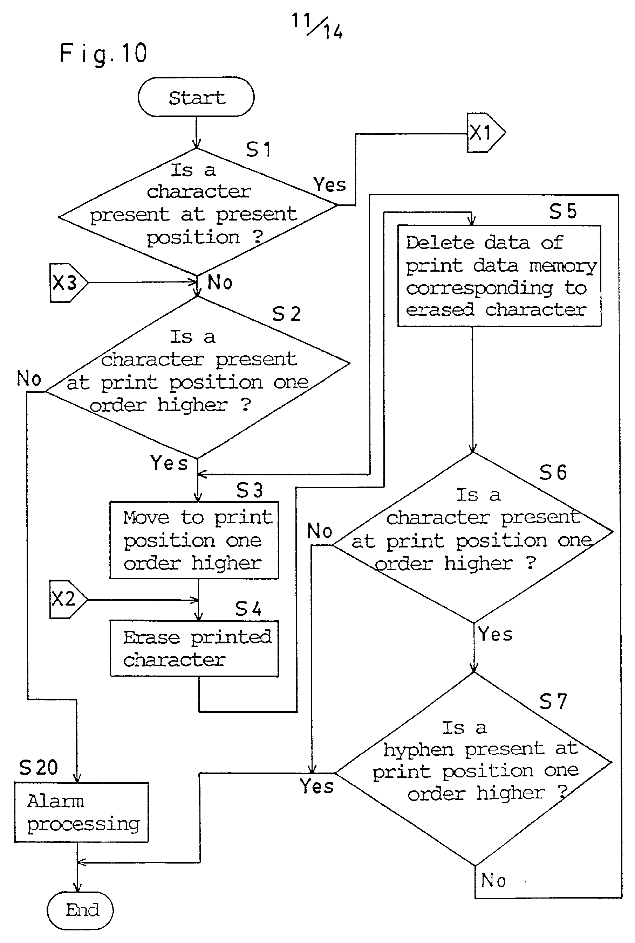

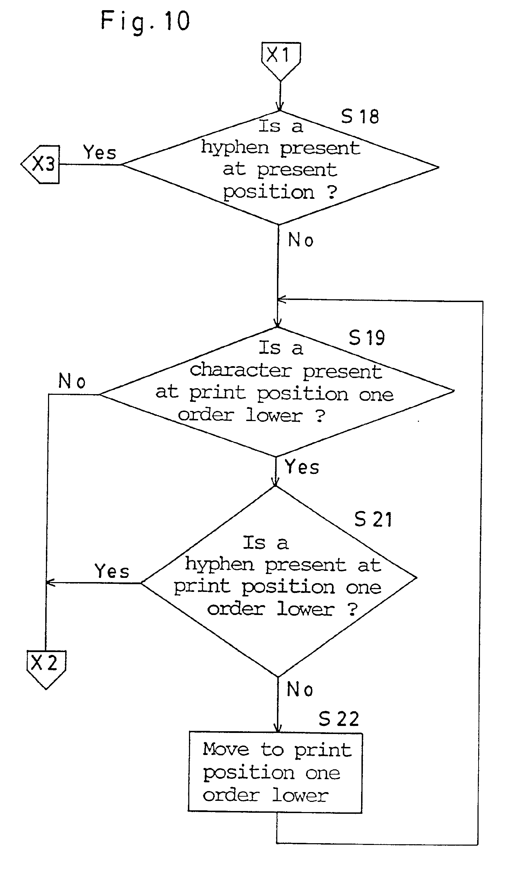

This word erase control is for not erasing a hyphen when the preceding word is erased and also when the following word is erased. Description is made on the routine of this word erase control based on a flowchart in Fig. 10, but steps S1 - S7 and S20 are the same as those in the flowchart in Fig. 7 of the above-mentioned embodiment, and therefore the description thereon is omitted and only the different points are described.

In the case where a character is present at the present position of the print head when the erase command key 23 is operated, processing proceeds from S1 to S18, and in S18, decision is made on whether or not the present position is a hyphen, and if a hyphen (the ninth print position in Fig. 6), processing moves to S2, and if not a hyphen, processing moves to S19.

28

In S19, decision is made on whether or not a character is present at the print position one order lower than the print position corresponding to the print head, and when no character is present, processing moves to S4, and when a character is present, processing moves to S21, and in S21, decision is made on whether or not a character located at the print position one order lower is a hyphen, and if a hyphen, processing moves to S4 and if not a hyphen, processing moves to S22. Then, in S22, the print head is moved to the print position one order lower, and processing returns to S19.

Thus, where a hyphen is present at the print position corresponding to the print head when the erase command key 23 is operated, the print head is moved to the position of the last character of the preceding word by S18, S2 and S3, and erasure is performed sequentially one by one from the last character to the head character of the preceding word by repeating S3 - S7, and the data of the print data memory 110 corresponding thereto is also deleted, and when erasure of the head character is completed, the result of decision in S6 becomes NO, and the control ends.

On the other hand, in the case where the print head corresponds to any one of characters of the preceding word when the erase command key 23 is operated, processing goes through S1 and S18, and repeats S19 and S21 - S22, and when the print head reaches the position of the last character of the preceding word, processing moves from S21 to S4, and repeats S4 - S7 and S3, and thereby erasure is performed sequentially one by one from the last character to the head character of the preceding word, and the data of the print data memory 110 corresponding thereto is also erased, and when erasure of the head character is completed, the control ends.

On the contrary, in the case where the print head corresponds to any one of characters of the following word when the erase command key 23 is operated, processing goes through S1 and S18, and repeats S19 and S21 - S22, and when the print head reaches the position of the last character of the following word, processing proceeds from S19 to S4, and repeats S4 - S7 and S3, and thereby erasure is performed sequentially one by one from the last character to the head character of the following word, and the data of the print data memory 110 corresponding thereto is also deleted, and when erasure of the head character is completed, the result of decision in S7 becomes YES, and the control ends.

As described above, the word erase control of the first example erases a hyphen at the print position one order lower than the last character of a word along with the word. Also, the word erase control of the second sample erases a hyphen at the print position one order higher than the head character of a word along with the word. Furthermore, the

30

word erase control of the third sample erases both a hyphen at the print position one order higher than the head character of a word and a hyphen at the print position one order lower than the last character of the word along with the word.

On the other hand, the word erase control of the fourth example is for not erasing both a hyphen at the print position one order higher than the head character of a word and a hyphen at the print position one order lower than the last character of the word when erasing the word.

Next, description is made on a fifth example of the word erase control.

This word erase control, in the case where two words are printed with connecting by a hyphen, handles the hyphen as a word which is a sectioning symbol between a word and another word and consists of a single character, and the preceding word preceding the hyphen, the hyphen, or the following word following the hyphen is erased as each unit as required.

First, description is made on summary of this word erase control to facilitates understanding description on the flowchart of the word erase control.

Fig. 6 schematically exemplifies a character string "EXANPLE-TYPE 1" wherein the preceding word preceding a hyphen (the ninth position) is printed in wrong spelling "EXANPLE" and the data in the print data memory 110, and spaces are typed at the first position and the fifteenth position respectively.

When the preceding word "EXANPLE" is erased, the print head is positioned at the print position of any one of the second position -- the eighth position, and by operating the erase command key 23, the print head is moved to the print position of the eighth position, and erasure is performed in sequence from the eighth position to the second position head character.

Also, when the following word "TYPE 1" following the hyphen is erased, the print head is positioned at the print position of any one of the tenth position - the fifth position, and by operating the erase command key 23, the print head moves to the print position of the fourteenth digit, and erasure is performed in sequence from the fourteenth position to the tenth position.

Then, when erasing the hyphen, the print head is positioned at the print position of the ninth position, and by operating the erase command key 23, only the hyphen is erased. Simultaneously with erasure of the printed characters, the data of the print data memory 110 corresponding to the respective printed character erased are deleted in sequence.

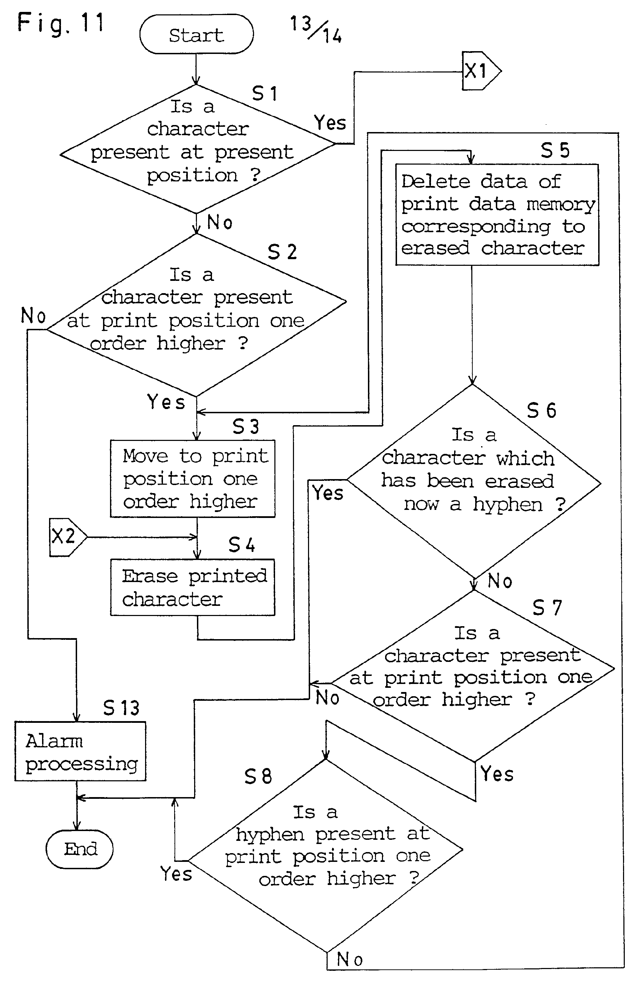

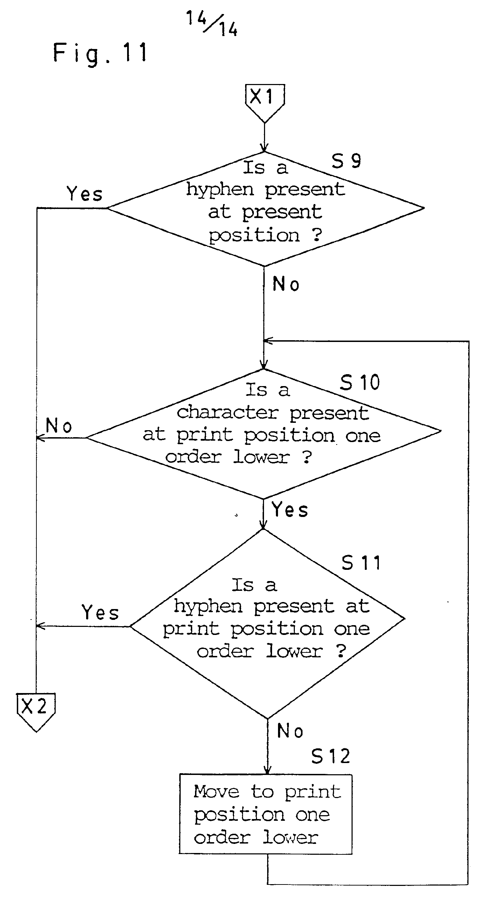

Next, description is made on the routine of the word erase control with reference to a flowchart in Fig. 11.

32

When the erase command key 23 is operated and the word erase command signal is outputted from the keyboard 3 to the CPU46, step S1 (hereinafter, expressed simply as S1, and the same is true of other steps) is executed, and in S1, decision is made on whether or not a character is present at the present position of the print head (whether or not a character has been printed) based on the data of the present position memory 112 and the data of the print data memory 110, and when a character is present at the present position, processing proceeds to S9, and when no character is present, processing proceeds to S2.

In S2, decision is made on whether or not a character is present at the print position one order higher (direction reverse to the printing direction), and when no character is present, processing moves to S13. This means that the case where no character is present at the present position and the print position one order higher is, for example, in Fig. 6, the case where the print head is located at the position on or after the print position of the sixteenth position after the space of the fifteenth position, or the case where the print position corresponds to the space at first position and the higher order side thereof is the left margin, and in these cases, in S13, alarm is raised by buzzer, alarm lamp or the like, and the control ends.

Also, in the case where the result of decision in S2 is YES (where a character is present at the print position one order higher), that is, where the print head is located at the position of the space (fifteenth position in Fig. 6) one order lower than the last character of the following word, processing proceeds to S3.

Steps S3 - S8 are for erasing characters sequentially one by one from the last character toward the higher order side, and in S3, a control signal is outputted from the CPU46 to the carriage drive motor driver 48, and thereby the carriage 27 is moved to the print position one order higher. Then, in S4, the same character is printed through the correction ribbon 44 with superposing on the printed character located at the print position corresponding to the present print head, and thereby the printed character is erased, and in the following S5, the data of the print data memory 110 corresponding to the printed character erased in S4 is deleted.

Also, in the next S6, decision is made on whether or not the character which has been erased now is a hyphen, and when a hyphen has been erased, the control ends, and when it is not a hyphen, processing moves to S7. Furthermore, in S7, decision is made on whether or not a character is present at the print position one order higher than the present position of the print head, and when a character is present, processing moves to S8, and when no character is present (the

34

second position in Fig. 6), the control ends. Then, in S8, decision is made on whether or not the print position one order higher than the present position of the print head is a hyphen, and when it is not a hyphen, processing returns to S3, and when it is a hyphen (the tenth position in Fig. 6), the control ends.

Accordingly, in the case where the following word is a word consisting of a plurality of characters, S3 - S8 are repeated, and the data of the print data memory 110 corresponding to the printed characters erased are deleted in sequence in parallel with sequential erasure up to the head printed character of the following word. Also, when the print head reaches the print position of the head character of the following word, and erasure up to the head character is completed, in S8, the print position one order higher is decided to be a hyphen, and the erase control ends.

Furthermore, when the erase command key 23 is operated in the state that the print head is positioned at the print position corresponding to any one of printed characters of the preceding word, any one of printed characters of the following word, or a hyphen, in S1, it is decided that a character is present at the present position, and processing moves to S9, and in S9, decision is made on whether or not the present position of the print head is a hyphen, and when it is a hyphen (the print position of the ninth position in Fig. 6), processing proceeds to S4, and when not a hyphen, processing proceeds to S10.

As described above, if a hyphen, processing moves to S4, and S4 - S6 are executed, decision in S6 becomes YES, and since the hyphen as a word has been erased, the control ends.

In S10, decision is made on whether or not a character is present at the print position one order lower (printing direction), and when no character is present at the print position one order lower (the print position of the fourteenth position in Fig. 6), processing proceeds to S4, and when a character is present, processing proceeds to S11, and S11, decision is made on whether or not the print position one order lower is a hyphen, and if it is a hyphen, processing proceeds to S4, and if not a hyphen, processing proceeds to S12, the carriage 27 is moved to the print position one order lower, and processing returns to S10.

Accordingly, in the case where a word is a character string consisting of a plurality of characters, S10 - S12 are repeated, and the print head is moved sequentially toward the lower order side. Then, when the print head comes to the print position of the last character of the preceding word, processing moves from S11 to S4, and when the print head comes to the print position of the last character of the following word, processing moves from S10 to S4. Furthermore, by repeating S4 - S8 and S3, likewise the above-mentioned, backward erasure is performed sequentially one by one from the last character of the preceding word to the head character of that word, or backward erasure is performed sequentially one by one from the last character of the following word to the head character of that word, and thereby the control ends.

As described above, when the preceding word preceding a hyphen is erased, only the preceding word is erased, when the following word following a hyphen is erased, only the following word is erased, and when the print head is located at the print position of a hyphen, only the hyphen is erased. Also, after erasure of the preceding word or the following word, the print head moves to the head position of each erased word, and therefore reprint can be made in correct spelling.

Also, in the above-mentioned fifth example, description is made on an example wherein two words are printed with connecting by a hyphen, but it is needless to say that three or more words printed with connecting by hyphens can also be applied.

In addition, in the above-mentioned embodiments, description is made on the case where the present invention is applied to the printing apparatus provided with the type wheel type printing mechanism, but the present invention can be applied likewise also to the printing apparatus provided with the ball type type printing mechanism.

Furthermore, the present invention can be applied in nearly the same way also to the printing apparatus which is provided with a thermal head and an erasing mechanism which erases characters sequentially from the head character of a word using a correction ribbon and a print ribbon.

38

CLAIMS

1. In a word-erasable printing apparatus having

a printing mechanism (PM) for printing characters or symbols corresponding to inputted data on a print paper,

a print data memory (110) for storing printed data so as to correspond to print positions,

a present position memory (112) for storing the present position of a print head of said printing mechanism (PM) so as to correspond to the print position, and

an erasing mechanism which starts operation by an input of a word erase command signal, and sequentially erases characters printed by said printing mechanism (PM), and thereby erases a word consisting of an assembly of characters,

said printing apparatus is characterized by comprising;

a detecting means for detecting whether or not a hyphen is present at the print position one order higher than the head character or the print position one order lower than the last character of a word containing a character at the print position corresponding to the print head by means of said print data memory (110) and said present position memory (112) on receiving said word erase command signal, and

a controlling means for outputting a control signal for erasing the hyphen at said print position to said erasing mechanism based on a signal from said detecting means.

2. In a word-erasable printing apparatus having

a printing mechanism (PM) for printing characters or symbols corresponding to inputted data on a print paper,

a print data memory (110) for storing this printed data so as to correspond to print positions,

a present position memory (112) for storing the present position of a print head of said printing mechanism (PM) so as to correspond to the print position, and

an erasing mechanism which starts operation by an input of a word erase command signal, and sequentially erases characters printed by said printing mechanism (PM) and thereby erases a word consisting of an assembly of characters,

said printing apparatus is characterized by comprising;

a detecting means for detecting whether or not a hyphen is present at the print position one order higher than the head character or the print position one order lower than the last character of a word containing a character at the print position corresponding to the print head by means of said print data memory (110) and said present position memory (112) on receiving said word erase command signal, and

a controlling means for outputting a control signal for not erasing the hyphen at said print position to said erasing mechanism based on a signal from said detecting means.

3. In a word-erasable printing apparatus having

40

a printing mechanism (PM) printing characters or symbols corresponding to inputted data on a print paper,

a print data memory (110) for storing this printed data so as to correspond to the print position,

a present position memory (112) for storing the present position of a print head of said printing mechanism so as to correspond to the print position, and

an erasing mechanism which starts operation by an input of a word erase command signal, and sequentially erases characters printed by said printing mechanism (PM) and thereby erases a word consisting of an assembly of characters with a unit of word,

said printing apparatus is characterized by comprising;

a detecting means for detecting whether or not a hyphen is present at the print position corresponding to the print head by means of said print data memory (110) and said present position memory (112) on receiving said word erase command signal, and

a controlling means which processes said hyphen as a single word and controls said erasing mechanism based on a signal from said detecting means.

CLAIMS

1.   In a word-erasable printing apparatus having

a printing mechanism (PM) for printing characters or symbols corresponding to inputted data on a print paper,

a print data memory (110) for storing printed data so as to correspond to print positions,

a present position memory (112) for storing the present position of a print head of said printing mechanism (PM) so as to correspond to the print position, and

an erasing mechanism which starts operation by an input of a word erase command signal, and sequentially erases characters printed by said printing mechanism (PM), and thereby erases a word consisting of an assembly of characters,

said printing apparatus is characterized by comprising;

a detecting means for detecting whether or not a hyphen is present at the print position one order higher than the head character and/or the print position one order lower than the last character of a word containing a character at the print position corresponding to the print head based on data of said print data memory (110) and said present position memory (112) on receiving said word erase command signal, and

a controlling means for outputting a control signal for erasing the hyphen detected or to be detected by said detecting means and said word to said erasing mechanism.

2. In a word-erasable printing apparatus having

a printing mechanism (PM) for printing characters or symbols corresponding to inputted data on a print paper,

a print data memory (110) for storing this printed data so as to correspond to print positions,

a present position memory (112) for storing the present position of a print head of said printing mechanism (PM) so as to correspond to the print position, and

an erasing mechanism which starts operation by an input of a word erase command signal, and sequentially erases characters printed by said printing mechanism (PM) and thereby erases a word consisting of an assembly of characters,

said printing apparatus is characterized by comprising;

a detecting means for detecting whether or not a hyphen is present at the print position one order higher than the head character or the print position one order lower than the last character of a word containing a character at the print position corresponding to the print head based on data of said print data memory (110) and said present position memory (112) on receiving said word erase command signal, and

a controlling means for outputting a control signal for not erasing the hyphen detected by said detecting means but for erasing said word to said erasing mechanism.

3. In a word-erasable printing apparatus having

a printing mechanism (PM) printing characters or symbols corresponding to inputted data on a print paper,

a print data memory (110) for storing this printed data so as to correspond to the print position,

a present position memory (112) for storing the present position of a print head of said printing mechanism so as to correspond to the print position, and

an erasing mechanism which starts operation by an input of a word erase command signal, and sequentially erases characters printed by said printing mechanism (PM) and thereby erases a word consisting of an assembly of characters with a unit of word,

said printing apparatus is characterized by comprising;

a detecting means for detecting whether or not a hyphen is present at the print position corresponding to the print head based on data of said print data memory (110) and said present position memory (112) on receiving said word erase command signal, and

a controlling means which assumes said hyphen as a single word and outputs a control signal for erasing only said hyphen detected by said detecting means to said erasing mechanism.

4.    In a printing apparatus according to claim 1; wherein said detecting means detects a hyphen on lower side  than said word, and said controlling means outputs said control signal for erasing said hyphen detected by said  detecting means and said word sequentially from said hyphen toward higher side.

5.    In a printing apparatus according to claim 1; wherein said detecting means detects a hyphen on higher side than said word, and said controlling means outputs said control signal for erasing said hyphen to be detected by said detecting means and said word sequentially from the  last character of said word toward higher side.

6.    In a printing apparatus according to claim 2; wherein said controlling means outputs said control signal for erasing sequentially from the last character of said word toward higher side.

7.    In a printing apparatus according to claim 1; wherein said controlling means outputs said control signal  for erasing said hyphen detected or to be detected by   said detecting means and said word sequentially from lower side toward higher side.

Fig. 1

```
┌──────────────┐
│ Input means  │───────────────────────────────────┐
└──────┬───────┘                                    │
       │                                            │
       │         ┌──────────────┐                   │
       │      ┌─▶│ Print data   │──────┐            ▼
       │      │  │ memory       │      │    ┌──────────────┐
       ▼      │  └──────────────┘      └───▶│ Detecting    │
┌──────────────┐ ┌──────────────┐           │ means        │
│ Printing     │ │ Present      │      ┌───▶│              │
│ mechanism    │▶│ position     │──────┘    └──────┬───────┘
│              │ │ memory       │                  │
├──────────────┤ └──────────────┘                  ▼
│ Erasing      │                           ┌──────────────┐
│ mechanism    │◀──────────────────────────│ Controlling  │
│              │                           │ means        │
└──────────────┘                           └──────────────┘
```

Fig. 2

Fig. 3

Fig. 4

# Fig. 5

| Platen drive motor | Carriage drive motor | Ribbon feed motor | Ribbon lift motor | Type wheel drive motor | Print hammer solenoid | Display |
|---|---|---|---|---|---|---|

25  47    31  48    43  49    45  50    34  51    38  39    52    21

| Platen drive motor driver | Carriage drive motor driver | Ribbon feed motor driver | Ribbon lift motor driver | Type wheel drive motor driver | Print hammer solenoid driver | Display controller |
|---|---|---|---|---|---|---|

PM          D          3/14

**C P U**

46

Keyboard    ROM | Program memory — 100

RAM | Present position memory — 112
Type position memory — 114
Print data memory — 110

3    53    C    54

EP 0 301 094 A1

Fig. 6

```
        E  X  A  N  P  L  E  —  T  Y  P  E  1
                                                              78     80
        1  2  3  4  5  6  7  8  9  10 11 12 13 14 15      77     79

        E  X  A  N  P  L  E  —  T  Y  P  E  1
```

00301094

Fig. 7

```
                    ( Start )
                        │
                        ▼                              ┌──┐
                      S1                              │X1│▷
                     ╱────╲                            └──┘
                    ╱  Is a ╲
                   ╱ character ╲    Yes
                  ╱ present at present╲──────────────┐
                  ╲   position ?      ╱               │
                   ╲               ╱                  │          S5
                    ╲────┬────╱                       ▼     ┌──────────────────┐
                         │ No                         │     │ Delete data of   │
                         ▼                            │     │ print data memory│
                       S2                             │     │ corresponding to │
                      ╱────╲                          │     │ erased character │
            No       ╱  Is a ╲                        │     └────────┬─────────┘
         ┌──────────╱ character present╲              │              │
         │          ╲ at print position one╱          │              │
         │           ╲ order higher ?   ╱             │              │
         │            ╲────┬────╱                      │              ▼
         │                 │ Yes                       │            S6
         │                 ▼                           │           ╱────╲
         │               S3                            │          ╱  Is a ╲
         │          ┌──────────────┐         No        │         ╱ character present╲
         │          │ Move to print│◄────────┐─────────┼────────╱ at print position one╲
         │          │ position one │         │         │        ╲ order higher ?   ╱
         │          │ order higher │         │         │         ╲────┬────╱
         │          └──────┬───────┘         │         │              │ Yes
         │    ┌──┐         │                 │         │              ▼
         │    │X2│────────►│   S4            │         │            S7
         │    └──┘         ▼                 │         │           ╱────╲
         │          ┌──────────────┐         │         │          ╱  Is a ╲
         │          │ Erase printed│         │    Yes  │         ╱ hyphen present at╲
         │          │ character    │─────────┴─────────┤◄───────╱ print position one╲
         │          └──────────────┘                   │        ╲ order higher ?   ╱
         │   S20                                        │         ╲────┬────╱
         ▼  ┌──────────┐                                │              │ No
         └─►│ Alarm    │                                │              │
            │ processing│◄──────────────────────────────┘              │
            └────┬─────┘                                               │
                 │◄──────────────────────────────────────────────────┘
                 ▼
             ( End )
```

Fig. 7

X1

```
            S8
    Is a
Yes  hyphen present
    at present
    position ?
            No

            S9
    Is a
No  character present
    at print position one
    order lower ?
            Yes

                S10
X2      Move to print
        position one
        order lower
```

00301094

Fig.8

```
                    ┌─────────┐
                    │  Start  │
                    └────┬────┘
                         │                        ┌──┐
                         │            ┌───────────▶│X1│
                         ▼            │            └──┘
                   ╱ S1  ╲            │
                 ╱  Is a   ╲   Yes    │
                ╱ character  ╲────────┘        ╱──────────────╲
                ╲ present at ╱                 │   Delete data of    │  S5
                 ╲ present  ╱                  │   print data memory │
                  ╲position?╱                  │  corresponding to   │
                    ╲──┬──╱                     │  erased character   │
                       │No                      └──────────┬──────────┘
                       ▼                                    │
                 ╱ S2     ╲                                 │
          No   ╱   Is a     ╲                               │
        ┌─────╱  character    ╲                             │
        │     ╲ present at print╱                           │
        │      ╲position one   ╱             ╱─────────────╲│
        │       ╲order higher?╱            ╱     Is a        ╲ S6
        │         ╲────┬────╱         No  ╱   character present ╲
        │          Yes │           ┌────╱  at print position one ╲
        │              ▼           │     ╲ order higher?         ╱
        │        ┌──────────┐      │       ╲──────────┬────────╱
        │        │ Move to print│   │             Yes │
        │        │ position one │   │                 ▼
        │        │ order higher │   │          ╱─────────────╲
   ┌──┐ │        └──────┬───────┘   │        ╱    Is a         ╲ S11
   │X2│─┼──────────────▶│           │      ╱  character which    ╲
   └──┘ │          S4   ▼           │      ╲  has been erased    ╱
        │        ┌──────────┐       │  Yes  ╲  now a hyphen?    ╱
        │        │Erase printed│    │◀───────╲──────────┬─────╱
        │        │ character   │    │                   │No
        │        └──────┬──────┘    │                   │
        │               │           │                   │
        ▼               │           │                   │
   ┌─────────┐          │           │                   │
   │ Alarm   │◀─────────┘           │                   │
   │processing│ S20                  │                   │
   └────┬────┘                      │                   │
        │                           │                   │
        ▼                           │                   │
   ┌─────────┐                      │                   │
   │   End   │                      │                   │
   └─────────┘                      │                   │
```

Fig. 8

X1

S12
Is a hyphen present at present position ?

Yes

No

S13
Is a character present at print position one order lower ?

No

Yes

S14
Is a hyphen present at print position one order lower ?

Yes

No

X2

S15
Move to print position one order lower

Fig. 9

```
                    ┌─────────┐
                    │  Start  │──────────────────────► ⟨X1⟩
                    └─────────┘
                         │
                         ▼
                        S1
                   ╱Is a      ╲        Yes
                  ╱ character   ╲──────────────────────┐
                 ╱ present at present ╲                 │
                  ╲  position ?  ╱                      │
                   ╲           ╱                        │                    S5
                        │ No                            ▼         ┌──────────────────────┐
                        ▼                               │         │ Delete data of       │
                       S2                               │         │ print data memory    │
                  ╱Is a        ╲                        │         │ corresponding to     │
          No     ╱ character present ╲                  │         │ erased character     │
         ┌──────╱ at print position one ╲               │         └──────────────────────┘
         │      ╲  order higher ?  ╱                    │                     │
         │       ╲               ╱                      │                     ▼
         │              │ Yes ◄─────────────────────────┘                    S6
         │              ▼                                          ╱Is a           ╲
         │             S3                                         ╱ character present ╲
         │      ┌──────────────┐                           No    ╱ at print position one ╲
         │      │ Move to print│                          ┌─────╱  order higher ?  ╱
         │      │ position one │                          │      ╲               ╱
         │      │ order higher │                          │            │ Yes
         │      └──────────────┘                          │            ▼
         │   ⟨X2⟩────────►│                               │           S16
         │              ▼  S4                             │      ╱Is a           ╲
         │      ┌──────────────┐                          │     ╱ character which  ╲
         │      │ Erase printed│                          │    ╱ has been erased    ╲
         │      │ character    │                    Yes   │    ╲ now a hyphen ?  ╱
         │      └──────────────┘◄─────────────────────────┘     ╲               ╱
         │              │                                              │ No
       S20                                                            
   ┌──────────┐                                                       
   │ Alarm    │                                                       
   │processing│                                                       
   └──────────┘                                                       
         │                                                            
         ▼                                                            
     ┌───────┐                                                        
     │  End  │                                                        
     └───────┘                                                        
```

Fig. 9

X1

**S8** Is a hyphen present at present position ?

Yes

No

**S9** Is a character present at print position one order lower ?

No

Yes

X2

**S10** Move to print position one order lower

Fig.10

```
                    ( Start )
                        │
                        ▼
                       S1                              ┌──▶ ⟨X1⟩
              ◇ Is a character          Yes            │
                present at present ─────────────┐      │
                position ?                      │      │
                        │ No                    │      │
        ⟨X3⟩ ──────────▶│                        ▼
                        ▼                       S5
                       S2              ┌─────────────────────┐
              ◇ Is a character         │ Delete data of      │
          No   present at print        │ print data memory   │
        ◀──── position one             │ corresponding to    │
                order higher ?         │ erased character    │
                        │ Yes          └─────────────────────┘
                        ▼                         │
                       S3                         ▼
              ┌─────────────────┐                S6
              │ Move to print   │      No ◇ Is a character
              │ position one    │      ◀── present at print
              │ order higher    │          position one
              └─────────────────┘          order higher ?
                        │                         │ Yes
        ⟨X2⟩ ──────────▶│                         ▼
                        ▼                         S7
                       S4                ◇ Is a hyphen
              ┌─────────────────┐   Yes    present at print
              │ Erase printed   │   ◀───── position one
              │ character       │          order higher ?
              └─────────────────┘              │ No
                        │
       S20              │
    ┌──────────┐        │
    │ Alarm    │◀───────┘
    │ processing│
    └──────────┘
         │
         ▼
      ( End )
```

Fig. 10

```
                          ┌──────┐
                          │  X1  │
                          └──┬───┘
                             │
                             ▼
                    ╱─────────────────╲      S 18
          ┌──────┐ ╱      Is a         ╲
   Yes    │  X3  │◄─╱  hyphen present   ╲
  ────────┤      │  ╲  at present       ╱
          └──────┘  ╲  position ?      ╱
                     ╲───────────────╱
                             │
                             │ No
                             │
                             ▼◄──────────────────────────┐
                    ╱─────────────────╲      S 19         │
                   ╱      Is a         ╲                  │
   No             ╱  character present  ╲                 │
  ◄──────────────╱  at print position one╲                │
                 ╲  order lower ?        ╱                │
                  ╲───────────────────╱                  │
                             │                           │
                             │ Yes                       │
                             ▼                           │
                    ╱─────────────────╲     S 21         │
                   ╱      Is a         ╲                 │
   Yes            ╱  hyphen present at  ╲                │
  ◄──────────────╱  print position one  ╲               │
                 ╲  order lower ?       ╱                │
                  ╲──────────────────╱                  │
       ┌──────┐            │                            │
       │  X2  │            │ No                         │
       └──────┘            │    S 22                    │
                           ▼                            │
                  ┌──────────────────┐                 │
                  │ Move to print    │                 │
                  │ position one     │─────────────────┘
                  │ order lower      │
                  └──────────────────┘
```

Fig. 11

Start

X1

S1
Is a character present at present position ?

Yes

No

S5
Delete data of print data memory corresponding to erased character

S2
Is a character present at print position one order higher ?

No

Yes

S3
Move to print position one order higher

X2

S4
Erase printed character

S6
Is a character which has been erased now a hyphen ?

Yes

No

S7
Is a character present at print position one order higher ?

No

Yes

S13
Alarm processing

S8
Is a hyphen present at print position one order higher ?

Yes

No

End

Fig. 11

```
                    ┌──┐
                    │X1│
                    └──┘
                      │
                      ▼
Yes           ╱ Is a      ╲  S9
◄─────────────  hyphen present
              ╲ at present  ╱
               ╲ position ? ╱
                      │
                     No
                      │
                      ▼
                ╱ Is a        ╲  S10
      No       ╱  character present ╲
   ◄──────────  at print position one
               ╲ order lower ?      ╱
                      │
                     Yes
                      │
                      ▼
                 ╱ Is a          ╲  S11
      Yes       ╱  hyphen present at ╲
   ◄───────────  print position one
                ╲ order lower ?     ╱
                      │
                     No
                      │           S12
                      ▼
               ┌─────────────┐
               │ Move to print│
               │ position one │
               │ order lower  │
               └─────────────┘

   ┌──┐
   │X2│
   └──┘
```

# INTERNATIONAL SEARCH REPORT 00301094

## I. CLASSIFICATION OF SUBJECT MATTER (if several classification symbols apply, indicate all) 3

According to International Patent Classification (IPC) or to both National Classification and IPC

Int.Cl$^4$     B41J29/36, G06F3/09, 3/12

## II. FIELDS SEARCHED

### Minimum Documentation Searched [4]

| Classification System | Classification Symbols |
|---|---|
| IPC | B41J29/26-29/373, G06F3/09, 3/12 |

### Documentation Searched other than Minimum Documentation to the Extent that such Documents are Included in the Fields Searched [5]

| | |
|---|---|
| Jitsuyo Shinan Koho | 1965 - 1987 |
| Kokai Jitsuyo Shinan Koho | 1971 - 1987 |

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| A | JP, A, 49-44808 (International Business Machines Corp.) 27 April 1974 (27. 04. 74) All sentences & US, A, 378084 & GB, A, 1382759 & DE, B2, 2338116 | 1-3 |
| Y | JP, A, 60-210482 (SCM Corporation) 22 October 1985 (22. 10. 85) Page 11, column 39, line 12 to page 14, column 53, line 9 & DE, A1, 3508472 & GB, A1, 2156559 | 1-3 |
| Y | JP, A, 60-132776 (Ricoh Co., Ltd.) 15 July 1985 (15. 07. 85) Page 3, upper right column, lines 1 to 3 (Family: none) | 1-3 |
| Y | JP, A, 58-175686 (Matsushita Electric Ind. Co., Ltd.) 14 October 1983 (14. 10. 83) Page 2, lower left column, lines 3 to 8, Fig. 1 (Family: none) | 1-3 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| June 12, 1987 (12. 06. 87) | June 29, 1987 (29. 06. 87) |

| International Searching Authority [1] | Signature of Authorized Officer [20] |
|---|---|
| Japanese Patent Office | |

Form PCT/ISA/210 (second sheet) (October 1977)